(19) Europäisches Patentamt
European Patent Office
Office européen des brevets

(11) **EP 2 110 587 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(51) Int Cl.:
***F16K 17/02*** *(2006.01)*

(21) Anmeldenummer: **08021497.6**

(22) Anmeldetag: **11.12.2008**

(54) **Vorrichtung zur Überdrucksicherung von druckbeaufschlagten Komponenten**

Device to protect pressurised components from overpressure

Dispositif destiné à la protection contre la surpression de composants alimentés par pression

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.04.2008 DE 102008018804**

(43) Veröffentlichungstag der Anmeldung:
**21.10.2009 Patentblatt 2009/43**

(73) Patentinhaber: **ArianeGroup GmbH**
**82024 Taufkirchen (DE)**

(72) Erfinder: **Schwarting, Walter, Dipl.-Ing.**
**26127 Oldenburg (DE)**

(74) Vertreter: **Marschall, Stefan et al**
**Elbpatent**
**Marschall & Partner PartGmbB**
**Jessenstrasse 4**
**22767 Hamburg (DE)**

(56) Entgegenhaltungen:
**US-A- 5 056 555**

EP 2 110 587 B1

**Beschreibung**

Die Erfindung betrifft eine Vorrichtung zur Überdrucksicherung von druckbeaufschlagten Komponenten, wie Rohrleitungen und Behältern, in Form einer vakuumgetragenen, durch Überdruck beaufschlagbaren Verschlußplatte, bestehend aus einer Gehäuseplatte und einer Deckplatte, wobei die Gehäuseplatte über konzentrisch angeordnete Dichtringe gegen die Deckplatte abgedichtet ist und wobei der von dem inneren Dichtring begrenzte Raum mit der zu sichernden druckbeaufschlagten Komponente und der zwischen den Dichtringen liegende Raum mit einer Unterdruckquelle verbindbar ist.

Der übliche Schutz von Behältern und von mit diesen verbundenen Rohrleitungssystemen gegen einen zur Zerstörung führenden, sich schnell entwickelnden Überdruck wird im allgemeinen realisiert durch Explosions-Schutzklappen, auch als Berstscheiben bezeichnet, die bei einer Überschreitung eines vorgegebenen Maximaldrucks zerstört werden. Derartige Berstscheiben sind üblicherweise hinsichtlich eines bestimmten, maximal erlaubten oder möglichen Überdrucks qualifiziert. Der Berstvorgang wird in der Regel über eine ringförmige Einkerbung in einer Deckscheibe mit einer definierten Kerbtiefe kontrolliert. Bei Erreichen des über die Kerbtiefe vorgegebenen Öffnungsdrucks reißt die Einkerbung auf, wodurch sich die Scheibe wie ein Deckel öffnet und den Überdruck entweichen läßt und diesen dadurch abbaut.

Diese bekannten Berstscheiben sind im allgemeinen zwar für rasche Druckanstiege, beispielsweise Deflagrationen oder Unterschall-Explosionen, ausgelegt, sie sind jedoch nur begrenzt geeignet zum Schutz vor Überschall- Explosionen, d.h. vor Detonationen. Dies liegt daran, dass das Aufreißen der Einkerbung einer Berstscheibe einen gewissen Zeitraum benötigt; der jedoch bei Hochgeschwindigkeits-Explosionen, also Detonationen, unter Umständen zu lang sein kann, um ein System wirklich vor einer Zerstörung schützen zu können. Zudem sind diese bekannten Berstscheiben durch die Abstimmung der Kerbtiefe in der Regel auf einen bestimmten, vorgegebenen Berstdruck eingestellt und somit festgelegt. Bei Experimenten oder bei Systemtests kann demgegenüber jedoch eine variable Überdruck-Sicherung erforderlich sein.

Daneben ist aus der US-A-5 056 555 eine Vorrichtung mit einer Druckregelungs-Charakteristik bekannt geworden, die wegen einer Kammerung des Volumens der in dieser Vorrichtung vorgesehenen Scheibe und der Öffnungsbegrenzung durch Anschlagsschrauben nur begrenzte Gasmengen durchlässt. Der Weg des Überdruck-Gases verläuft dabei von außen an einer von ihrem Dichtsitz abgehobenen und nach unten fallenden Platte vorbei zu einem Stutzen. Die Schließkraft am Dichtsitz ist vergleichsweise gering und dadurch stark begrenzt, dass nur ein verhältnismäßig kleiner Ringspalt evakuiert werden kann und diese Schließkraft der großen Öffnungskraft gegenüber steht, die sich durch p, den Betriebsdruck bzw. Öffnungsdruck auf einer Fläche mit einem relativ großen Durchmesser ergibt. Dies führt dazu, dass bei dieser bekannten Vorrichtung die Platte bereits bei einem vergleichweise geringen Druck gemäß dem Kräftegleichgewicht öffnet und damit weder einen regelnden Charakter und noch die Eigenschaft einer Explosionsschutzklappe hat.

Aufgabe der Erfindung ist es, eine derartige Vorrichtung so auszubilden, dass sie bei einer möglichst einfachen Ausführung sowohl eine Einstellbarkeit des Öffnungsdrucks als auch eine spontane Öffnung zur Überdruck-Entlastung ermöglicht.

Die Erfindung löst diese Aufgabe durch eine Vorrichtung gemäss Anspruch 1. Ein Vorteil der Vorrichtung nach der Erfindung besteht darin, dass bei einer spontanen Öffnung aufgrund des schnellen Kippens des Kräftegleichgewichts zwischen der schließenden und der öffnenden Kraft jegliche Verzögerung vermieden und damit ein von der Detonationsgeschwindigkeit abhängiger Druckanstieg begrenzt wird. Ein weiterer Vorteil der erfindungsgemäßen Vorrichtung liegt in der durch die Einstellbarkeit des Öffnungsdrucks bestehenden Möglichkeit einer variablen Anpassung bei Systemtests, verglichen mit den üblicherweise festgelegten Öffnungsdrücken, wie sie beispielsweise bei den herkömmlichen Berstscheiben gegeben sind.

Eine weitere vorteilhafte Anwendung der Vorrichtung nach der Erfindung ist der Schutz und die Absicherung gegen unbeabsichtigten Überdruck, z.B. in Systemen mit kryogenen Gasen und Gasgeneratoren. Da die Vorrichtung zur Absicherung auch bei einer geringeren Druckanstiegsrate als sie üblicherweise bei Explosionen auftritt eingesetzt werden kann, ist eine Anwendung auch in Systemen möglich, bei denen verdampfungsbedingte, spontane Druckanstiege oder Gaserzeugungen stattfinden. Generell kann die erfindungsgemäße Vorrichtung in ein beliebiges druckführendes System mit entsprechenden Anforderungen eingebunden und an vorgegebene Randbedingungen beispielsweise bezüglich auftretender gasförmiger oder flüssiger Volumenströme, Rohrquerschnitte, selbsttätig schließender Funktion, Temperaturkompatibilität, Inertgasspülung etc. angepaßt werden.

Nachfolgend soll die Erfindung anhand eines in der Zeichnung dargestellten Ausführungsbeispiels näher erläutert werden. Es zeigen:

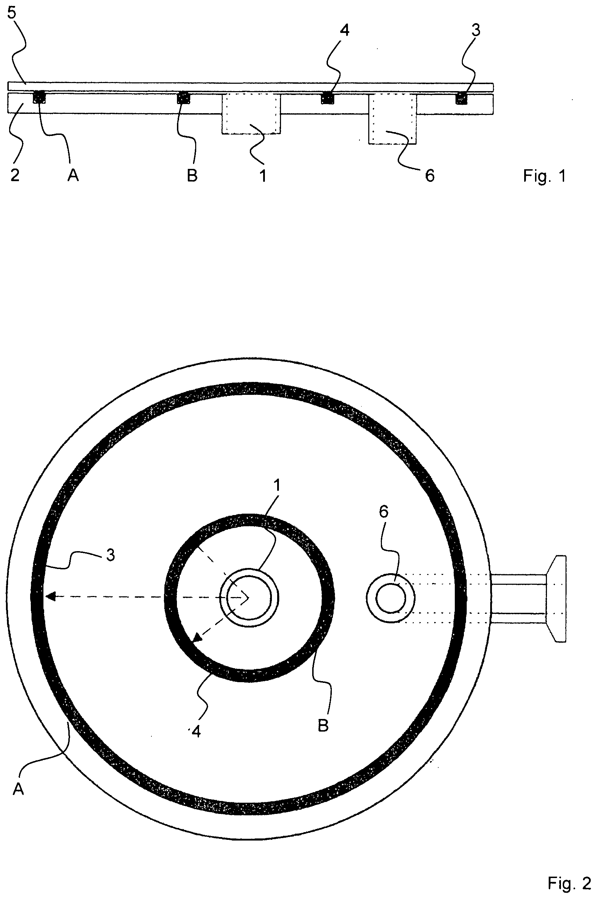

Fig. 1    einen vertikalen Schnitt durch eine Vorrichtung zur Überdrucksicherung und

Fig. 2    die Vorrichtung gemäß Fig. 1 in Draufsicht.

Eine gegen Überdruck zu entlastende Rohrleitung 1, die entweder als Sackleitung oder als Stutzen an einem Behälter ausgebildet sein kann, befindet sich im Zentrum einer Gehäuseplatte 2. Alternativ kann diese Rohrleitung 1 auch außerhalb des Zentrums der Gehäuseplatte 2 angeordnet sein. Diese Gehäuseplatte 2 ist durch einen Satz konzentrisch angeordneter O-Ringe 3 und 4, die in entsprechend ausgebildete Ringspalte A und B eingelegt sind, gegen eine vakuumgetragene, d.h. angesogene Deckplatte 5 abgedichtet. Das erforderliche Vakuum wird dabei über einen Vakuumanschluß 6 aufgebracht.

Es ergibt sich eine Kraftwaage, bei der die schließende Kraft durch die Druckdifferenz $\Delta p$ zwischen dem Atmosphärendruck und dem Vakuumdruck auf der Fläche des Ringspaltes A gegen die öffnende Kraft steht, die sich aus dem Druck der angeschlossenen Rohrleitung 1, $p_{Line}$, auf die Fläche des Ringspaltes B ergibt.

Der Druck $F_B$ der Rohrleitung 1, der auf die Fläche des Ringspaltes B mit der öffnenden Kraft $F_{open}$ wirkt, ergibt sich anhand der allgemein gültigen Beziehung $p=F/A$; $F=p*A$, wobei F die Kraft und A die Fläche ist, zu:

$$F_{open} = p_{Line} * F_B \qquad \text{(öffnende Kraft)}$$

$$F_{close} = \Delta p * F_A \qquad \text{(schließende Kraft)}$$

Im Moment der Öffnung herrscht ein Kräftegleichgewicht, bei dem gilt:

$$F_{open} = F_{close}$$

und somit $p_{Line} * F_B = \Delta p * F_A$

Durch eine geeignete Voreinstellung des Verhältnisses der Flächen $F_A$ und $F_B$ der beiden Ringspalte zueinander sowie durch die Festlegung des Differenzdrucks $\Delta p$ wird das Kraft-Gleichgewicht definiert und es kann damit jeder gewünschte Öffnungsdruck $p_{Line}$ eingestellt werden:

$$p_{Line} = \Delta p * F_A / F_B$$

Eine wesentliche Anwendung der vorangehend beschriebenen Vorrichtung ist die Absicherung gegen Explosions-Überdrücke. Dazu wird die ExplosionsSchutzklappe in das Leitungssystem eines zu testenden Systems integriert, zum Beispiel durch Anschließen der Rohrleitung 1 zum Ringspalt B in der Nähe einer möglichen Explosionsquelle mittels eines T-Stücks. Die Vakuumverbindung wird zum Ringspalt A hergestellt, und der Vakuum-Druck wird auf einen vorgegebenen Absolutdruck eingestellt. Nach dem Auflegen der Deckplatte 5 wird über den Vakuumanschluß 6 das Vakuum angelegt und die Deckplatte 5 wird durch den so erzeugten Unterdruck angepreßt, wodurch zugleich auch die Rohrleitung 1 verschlossen wird. Nunmehr kann das System gefüllt, bedrückt und betrieben werden. Ergeben sich in der Rohrleitung 1 Drücke, die höher sind als die gewählte Auslegung des Kräftegleichgewichts oder als es die Einstellung der Parameter Flächenrelation und Druckdifferenz ergab, so öffnet sich die Deckplatte 5 und entläßt den Systemdruck an die Umgebung.

Bei Hydrazin führenden Systemen ist es in diesem Zusammenhang vorteilhaft, wenn die vorangehend beschriebene Explosionsschutzvorrichtung unter einer Wasserdusche betrieben wird, wobei der Wasserstrom alternativ erst beim Öffnen des Deckels durch einen sich im gleichen Moment schließenden Schaltkontakt zur Aktivierung eines Magnetventils freigegeben werden kann.

Die Spontaneität der Öffnung ist außerdem über die Massenträgheit der Deckplatte 5 einstellbar, wobei eine leichte Platte schneller beschleunigt wird und somit spontaner öffnet als eine Platte mit einer größeren Masse. Das elektrisch betriebene Vakuumsystem ist zum Schutz gegen Stromausfall vorzugsweise an eine unabhängige Stromversorgung angeschlossen, wodurch ein Ausfall der Vakuumversorgung ausgeschlossen werden kann. Gegebenenfalls kann zusätzlich auch eine Redundanz vorgesehen werden.

Der besondere Fall einer Überdrucksicherung kann bei Vakuumkammern erforderlich sein, wenn konstruktionsbedingt der Kammerdruck im Bereich des Umgebungsdrucks begrenzt werden muss. Eine in der Vakuumkammer platzende Druckgasleitung oder freigesetzte, verdampfende Flüssigkeiten oder Flüssiggase führen zu spontanen Drückerhöhungen. Die beschriebene Explosionsschutz-Vorrichtung kann nun durch Weglassen des Dichtrings sowie des Vakuumanschlusses 6 über den Stutzen 1 an dem vakuumführenden System angeschlossen werden. Bei der Entwicklung eines Innendrucks, der den äußeren Luftdruck überschreitet, öffnet sich die Klappe spontan.

**Patentansprüche**

1.  Vorrichtung zur Überdrucksicherung von druckbeaufschlagten Komponenten, wie Rohrleitungen und Behältern, in Form einer vakuumgetragenen durch Überdruck beaufschlagbaren Verschlussplatte, wobei die Vorrichtung eine Gehäuseplatte (2) und eine Deckplatte (5) umfasst,
    wobei die Gehäuseplatte über konzentrisch angeordnete Dichtringe (3, 4) gegen die Deckplatte (5) abgedichtet ist,
    wobei der von dem inneren Dichtring (4) begrenzte Raum mit der zu sichernden druckbeaufschlagten Komponente (1) und der zwischen den Dichtringen (3, 4) liegende Raum mit einer Unterdruckquelle verbindbar ist, **dadurch gekennzeichnet, dass** die vom inneren Dichtring (4) begrenzte Fläche kleiner ist als die zwischen den Dichtringen (3, 4) liegende Fläche.

2.  Vorrichtung nach Anspruch 1, **dadurch gekennzeichnet, dass** die zu sichernde Rohrleitung (1) im Zentrum der scheibenförmig ausgebildeten Gehäuseplatte (2) anordenbar ist.

3.  Vorrichtung nach Anspruch 1, **dadurch gekennzeichnet, dass** die zu sichernde Rohrleitung (1) außerhalb des Zentrums der Gehäuseplatte (2) anordenbar ist.

4.  Vorrichtung nach einem der Ansprüche 1 bis 3, **dadurch gekennzeichnet, dass** das Vakuum über einen Vakuumanschluss (6) aufbringbar ist.

**Claims**

1.  A device for protecting pressurised components, such as pipelines and containers, against overpressure, the overpressure protection being in the form of a vacuumsupported closing plate which may be subjected to overpressure, wherein the device comprises a housing plate (2) and a cover plate (5),
    wherein the housing plate is sealed against the cover plate (5) via concentrically arranged sealing rings (3, 4), wherein the space delimited by the inner sealing ring (4) can be connected with the pressurised component (1) to be protected and the space lying between the sealing rings (3, 4) can be connected to a vacuum source **characterised in that** the area delimited by the inner sealing ring (4) is smaller than the area located between the sealing rings (3, 4).

2.  The device according to claim 1, **characterised in that** the pipeline (1) to be protected can be arranged in the centre of the disk-shaped housing plate (2).

3.  The device according to claim 1, **characterised in that** the pipeline (1) to be protected can be arranged outside the centre of the disk-shaped housing plate (2).

4.  The device according to one of claims 1 to 3,
    **characterised in that** the vacuum can be applied via a vacuum connection (6).

**Revendications**

1.  Dispositif de sécurisation de surpression de composants soumis à la pression, comme les conduites et réservoirs, sous la forme d'une plaque de fermeture supportée par le vide pouvant être sollicitée par une surpression, le dispositif comprenant une plaque de boîtier (2) et une plaque de couverture (5),
    la plaque de boîtier étant appliquée hermétiquement contre la plaque de couverture (5) par le biais de bagues d'étanchéité (3,4) disposées de façon concentrique, l'espace limité par la bague d'étanchéité intérieure (4) avec le composant (1) soumis à la pression à sécuriser et l'espace se trouvant entre les bagues d'étanchéité (3,4) pouvant être reliés à une source de dépression,
    **caractérisé en ce que** la surface limitée par la bague d'étanchéité intérieure (4) est plus petite que la surface située entre les bagues d'étanchéité (3,4).

2.  Dispositif selon la revendication 1, **caractérisé en ce que** la conduite à sécuriser (1) peut être disposée au centre de la plaque de boîtier (2) constituée en forme de disque.

3.  Dispositif selon la revendication 1, **caractérisé en ce que** la conduite à sécuriser (1) peut être disposée en dehors du centre de la plaque de boîtier (2).

4. Dispositif selon l'une quelconque des revendications 1 à 3, **caractérisé en ce que** le vide peut être appliqué par le biais d'un raccord de vide (6).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5056555 A